Europäisches Patentamt

European Patent Office

Office européen des brevets

(11) Publication number: **0 027 306**
**B1**

(12) **EUROPEAN PATENT SPECIFICATION**

(45) Date of publication of patent specification: **17.04.85**

(51) Int. Cl.⁴: **H 05 B 6/10, B 29 C 65/00**

(21) Application number: **80302688.9**

(22) Date of filing: **06.08.80**

(54) Induction heating apparatus and method of securing two workpieces or sheets.

(30) Priority: **24.08.79 US 69429**

(43) Date of publication of application:
**22.04.81 Bulletin 81/16**

(45) Publication of the grant of the patent:
**17.04.85 Bulletin 85/16**

(84) Designated Contracting States:
**CH DE FR GB LI NL SE**

(56) References cited:
**FR-E- 88 665**
**GB-A-1 205 221**
**GB-A-2 005 970**
**US-A-3 816 690**
**US-A-4 017 701**

(73) Proprietor: **The Government of the United States of America as represented by the Administrator of the National Aeronautics and Space Administration**
**Washington D.C. 20546 (US)**

(72) Inventor: **Buckley, John D.**
**23 East Governor Drive**
**Newport News Virginia 23602 (US)**
Inventor: **Swaim, Robert J.**
**702 Aberdeen Road**
**Hampton Virginia 23661 (US)**
Inventor: **Fox, Robert L.**
**Box 60 Route 2**
**Hayes Virginia 23072 (US)**

(74) Representative: **De Minvielle-Devaux, Ian Benedict Peter**
**CARPMAELS & RANSFORD 43, Bloomsbury Square**
**London WC1A 2RA (GB)**

Courier Press, Leamington Spa, England.

## Description

This invention relates to an induction heating apparatus and to a method for securing two workpieces or sheets by means of such apparatus. The apparatus has the particular advantage that it is suitable for use in environments where the use of known induction heaters is limited.

Induction heating is well known in the art. When a current passes through a conductive coil, a magnetic flux is produced inside and around the coil. When a mass of conducting metal is moved in this magnetic field or is subjected to a changing flux, induced currents called eddy currents circulate in the mass. In most instances, eddy currents are wasted energy, but in induction heating they are the actual producers of heat.

An example of such prior knowledge regarding the use of induction heating is provided in GB—A—2 005 970 where the generation of a fluctuating electromagnetic flux in a U-shaped core by passing an oscillating electrical signal through a coil wrapped around a portion of the core is disclosed as producing heat in a work piece that is brought into the proximity of the ends of the U-shaped core so that the work piece is maintained in slightly spaced relationship with each end of the U-shaped core to form a closed magnetic flux path.

To provide a proper oscillating electrical signal for the generation of a useful fluctuating electromagnetic flux for induction heating, an electronic circuit generally described as a tank circuit consisting of at least one capacitor and one inductor is used. As in U.S. Patent No: 4,017,701 such electrical energy can be supplied via a tank circuit comprising a capacitor and an inductor connected in parallel to a heating coil forming part of a secondary coil; the tank circuit being connected in parallel with the electrical energy supply.

When welding thermoplastics, one places conducting metal either on top of a piece to be heated or between the two pieces to be joined. Thermoplastics are transparent to magnetic flux, so an induction heater can direct flux through the plastic to the metal. The heat produced in the conducting metal softens and joins the plastics.

Many types of induction heaters are presently in use. Their use is limited, however, by several disadvantages. Induction heating presently involves passing a high-power current, often of several kilowatts, through an inducting coil to effect high heat in the conducting metal. The coil suffers self-induced power losses which are manifested as heat in the coil. If low power currents are passed through the coil, as in the invention of U.S. Patent No. 3,864,186, heat induced in the conducting metal is low.

Air or fluid cooling has sufficed to keep high-power systems from overheating, as in the heaters of U.S. Patents Nos. 4,120,712 and 3,738,892, but in a vacuum environment such as outer space, cooling systems are impractical, because energy is not readily available for their operation. Without a cooling system, an induction heater remains cool only if the coil is large enough to accommodate what power passes through it. A coil of a size able to accommodate the kilowatts necessary for induction of intense heat is prohibitively large.

Induction heaters now in use are also limited in their efficiency. Generally, magnetic flux travels to the material to be heated in one of two ways. Either the coil is set atop the piece to be heated, or such a piece is placed within the coil. The latter method maximizes efficiency, but limits the size of materials which may be joined. Use of the former method results in losses of magnetic flux all around the coil.

In fabrication of large items such as space structures a portable induction heater which needs no external cooling is desirable for sealing seams and joining components. A portable heater ideally uses little power, which power may be readily obtained, and must be able to be controlled by easily miniaturized components.

The present invention provides means for overcoming various disadvantages of the prior art.

The present invention, in one aspect, provides a relatively low-power induction heating apparatus for heating an electrical conductive workpiece above a predetermined temperature comprising:

electrical energy means for providing a line current at a fixed frequency and voltage;

a tank circuit comprising a capacitor and an inductor connected in parallel, said tank circuit being connected in parallel with said electrical energy means, the values of said capacitor and said inductor being such that said tank circuit is in resonance at said fixed frequency;

means for focusing the magnetic flux generated by said inductor onto an electrical conductive workpiece to heat it above said predetermined temperature;

said means for focusing the magnetic flux generated by said inductor consisting of a curved pole piece having two ends with the ends approaching each other and nearly brought together, thereby leaving a relatively short gap between the two ends, so that the magnetic flux generated by said inductor and focused by the said focusing means passes through the said workpiece;

wherein when said induction heating apparatus is placed in its operating position with said gap in the vicinity of said workpiece and with said workpiece outside said gap the combined thermal mass of said workpiece and reluctance to the flow of the magnetic flux from one of said two ends to the workpiece, through the workpiece and then from the workpiece to the other of said two ends are low enough to allow the eddy currents generated in said workpice by said magnetic flux to heat said workpiece above said predetermined temperature.

In a second aspect, the invention provides a method of securing by relatively low-power induction heating two sheets of thermoplastic material to each other which comprises:

providing electrical power at a fixed frequency to a tank circuit with a resonant frequency at said fixed frequency, said tank circuit comprising a capacitor and an inductor connected in parallel;

providing a curved pole piece terminating in ends, said ends approaching each other and nearly brought together thereby leaving a short gap between the two ends;

inducing a flux in said curved pole piece by having the coils of said inductor wrapped around said curved pole piece;

placing a member emitting heat when subjected to flux between the sheets to be secured by induction heating;

focusing the flux induced in the curved pole piece on the sheets to be joined and on the heat-emitting member by having said short gap between the two ends greater than the distances between the ends and the member; and

maintaining flux concentration until the sheets have intermixed around the heat-emitting member to effect a joint.

In a third aspect, the invention provides a method of securing by relatively low-power induction heating two perforated non-thermoplastic workpieces to each other which comprises:

providing electrical power at a fixed frequency to a tank circuit with a resonant frequency at said fixed frequency, said tank circuit comprising a capacitor and an inductor connected in parallel;

providing a curved pole piece terminating in ends, said ends approaching each other and nearly brought together thereby leaving a short gap between the two ends;

inducing a flux in said curved pole piece by having the coils of the inductor wrapped around the curved pole piece;

placing a member emitting heat when subjected to flux between thermoplastic sheets over which are placed non-thermoplastic workpieces having perforations to be secured by induction heating;

focusing the flux induced in the curved pole piece on the sheets and on the heat-emitter member by having said short gap between the two ends greater than the distances between the ends and the member;

maintaining flux concentration until the sheets have intermixed around the heat-emitting member and flowed into the perforations to effect a joint.

among the advantages of the invention are that the apparatus can be appropriate for use in special environments, such as outer space, or on the earth, or in motionless surroundings; that an air or fluid cooling system need not be used; that the apparatus makes use of essentially all the flux generated by an induction coil; that the flux is transferred efficiently to a body outside the induction coil; that the apparatus can be portable; that it can use low input power to accomplish high-temperature melting and joining of materials; and that power may be supplied by a small area of solar paneling.

Generally, the apparatus will normally include a tank circuit, an inductive pole piece and a low-power source. The inductive coil of the tank circuit encircles the pole piece. The pole piece is curved, its ends being nearly brought together. When a current of low power passes through the coil, the flux generated within the coil travels to the ends of the pole piece. The flux may then be conveyed to the material to be inductively heated; for example, it may travel through a layer of thermoplastic to a wire screen, which screen inductively heats and melts the thermoplastic.

The invention will be exemplified by the following description and the accompanying drawings wherein:

FIG. 1 is a cross-sectional view of the induction heating apparatus in the form of an induction gun positioned for use above material to be joined;

FIG. 2 is a cutaway view of thermoplastic materials to be joined; and

FIG. 3 is a cutaway view of the arrangement of materials used when two sheets of aluminum are to be joined.

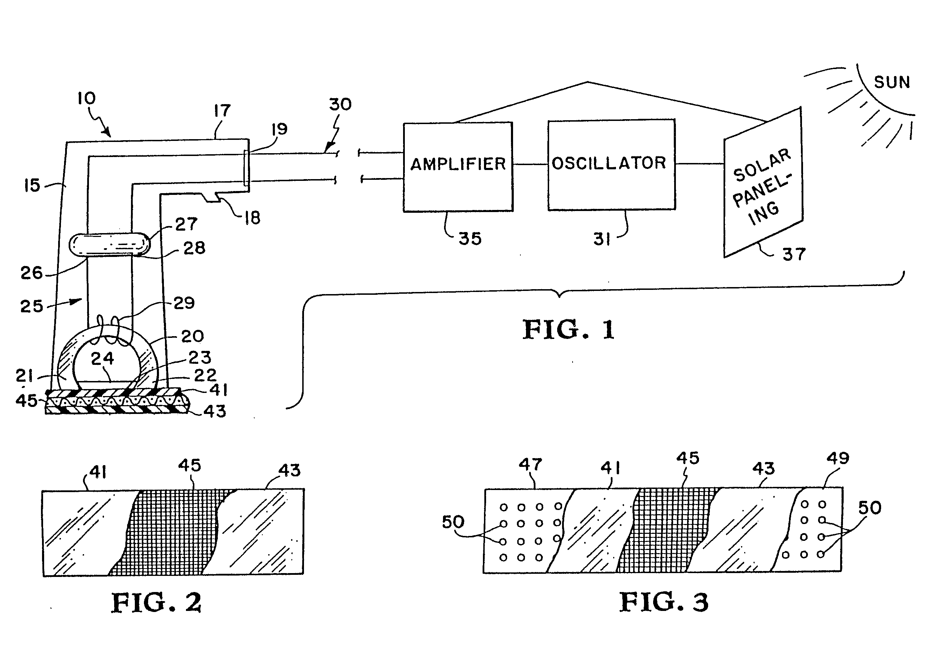

Referring now to Fig. 1, an induction heating gun constructed in accordance with this invention is represented generally by the reference numeral 10. The heating gun 10 is contained in a housing 15, and comprises a curved pole piece 20, a tank circuit designated generally by the reference numeral 25, and an input of electrical energy designated generally by the reference numeral 30.

The pole piece 20 is constructed of an inductive material, e.g. powdered iron or an alloyed ferrite generally cylindrical in shape, it is curved such that its ends 21 and 22 approach each other but leave a gap 23 between themselves. The length of the gap 23 may be varied, as may be the composition and size of the pole piece 20, according to results desired. In the preferred embodiment of the invention, the pole piece 20 is constructed from a toroid of powdered iron. A segment is removed from the toroid, leaving a gap 23 sufficient in length to allow heating of the materials to be joined. A filler piece 24 may be fitted into the gap 23. Such a filler piece 24 is made of a fluorocarbon polymer sold under the tradename of Teflon by the du Pont Company, or a similar material.

The tank circuit 25 includes a capacitor 27 and an inductor coil 29 having ends 26 and 28. The inductor coil 29 may be of 10-gauge copper wire or other conductive material. The inductor coil 29 encircles the pole piece 20, such that it is in actual contact with the pole piece 20. The number of turns of the inductor coil 29 around the pole piece 20 varies with desired heating results, but excellent performance has been obtained with as few as three turns, and inductive heat has been produced by the magnetic flux generated by a single-turn inductor coil.

The ends 26 and 28 of the inductor coil 29 are connected to the capacitor 27. The capacitor 27 may be single, as depicted in Fig. 1, or several capacitors may be connected in parallel. In the preferred embodiment, the resultant tank circuit 25 has a reactance of about 70 ohms.

The capacitor 27 of the tank circuit 25 connects to the input of electrical energy 30. Fig. 1 shows a suggested arrangement of components which control the characteristics of the electrical input 30. In theory, any combination of elements providing 30 watts or more of power to the tank circuit 25 may be used. In the preferred embodiment of Fig. 1, an oscillator 31 and amplifier 35 regulate the frequency and current supplied to the tank circuit 25. The oscillator 31 converts a direct current to an alternating current of a chosen frequency; the amplifier 35 increases the strength of the electrical impulse given to the tank circuit 25.

The ultimate source of electrical energy may be any of those known in the art. In the embodiment of Fig. 1, solar energy is suggested. Twenty square feet of solar paneling 37 generally supplies the power necessary to bond thermoplastics using the apparatus and method of the present invention. The solar paneling 37 shown here is a source of direct current; and alternating current input is also usable.

The heating gun 10 may be housed in a portable container. The oscillator 31 and amplifier 35 may be miniaturized or transistorized and placed within the housing to make the entire system compact and portable. A suggested housing 15 is shown in Fig. 1, enclosing the heating gun 10. Made of plastic, it includes a handle 17, a power switch 18 and a power input receptacle 19. The handle 17 allows manual positioning and movement of the heating gun over an area of materials to be joined. The power switch 18, electrically connected to the input of electrical energy 30, controls supply of electrical current to tank circuit 25. The power input receptacle is one or more apertures designed to receive the current-carrying wires of the input of electrical energy 30.

Turning now to Fig. 2, a typical arrangement of materials to be joined is seen in cutaway view. Sheets 41 and 43 of thermoplastic or other suitable organic matrix composite may be joined by the method of the present invention. The sheets 41 and 43 need not be identical in composition; a polysulfone, for example, may be joined to an acrylic, or a graphite/acrylic composite material to a glass polysulfone. The sheets 41 and 43 may range in thickness from very thin up to about 0.64 cm each, under the present method.

A screen 45 of a high resistance, low reluctance metal is placed between the sheets 41 and 43 to be joined. The thickness of the wires 46 making up the screen 45 may vary with heating results desired and with the degree of structural stiffening expected of the screen 45. In the preferred embodiment, a carbon-steel screen 45, or 28-gauge wire and 26-mesh screen is used. A perforated metal sheet or scattered metal particles may be substituted for the screen 45.

Returning to Fig. 1, the operation of the induction heater is easily understood. The following description refers to the sheets 41 and 43 being joined as thermoplastics; the reference is not intended to limit the scope of the invention.

A wire screen 45 is placed between the sheets 41 and 43 to be joined. The heating gun is positioned above the sheets 41 and 43 and the screen 45, with the ends 21 and 22 of the pole piece 20 touching one sheet 41, and with the gap 23 of the pole piece 20 located above the area of sheets 41 and 43 to be joined.

When the power switch 18 is moved to engage an electrical input 30, an alternating current enters the tank circuit 25. The capacitor 27 increases the Q of the tank circuit 25, in turn increasing the current flow through the inductor coil 29. Direction of the current along the inductor coil 29 reverses at each cycle of alternating current.

Current flow in the inductor coil 29 creates a magnetic flux within the turns of the coil 29. The flux is picked up by the pole piece 20 and carried to an end 21 or 22. The flux then jumps to the wire screen 45 rather than across the gap 23 to the other end 22 or 21. The flux is readily transferred to the screen 45 through a sheet 41 of thermoplastic because thermoplastics are transparent to magnetic flux.

Since direction of current in the inductor coil 29 changes very rapidly, the flux is constantly changing in magnitude and direction at any given point. This is true in the metal screen 45 as well as in the pole piece 20. Hysteresis creates eddy currents in the screen 45, which currents are manifested as heat in the screen 45.

The screen is tuned so that the heat produced in the wire screen 45 is sufficient to warm to melting temperature the adjacent sheets 41 and 43 of material to be joined without burning or destroying said layers. The thermoplastics 41 and 43 soften and flow around the apertures of the screen and fuse with one another. When the system has cooled, a strong bond has been formed between the now-joined sheets 41 and 43. The wire screen 45 remains within the fused sheets 41 and 43, and adds support to structures formed from the thermoplastics. The heating gun 10 may induce heat at one given point, or may be moved along a seam at a controlled speed.

The exact specifications of a given induction heating gun 10 vary with the results desired in its operation. A great advantage of the heating gun 10 is that it may be tuned to effect high heat in a screen 45 with a low power input. A few general suggestions and a specific example follow.

As mentioned before, the pole piece 20 is preferably an altered toroid, made of powdered iron or an alloyed ferrite material. It is large in diameter and length as compared to the wires of the screen 45. Its relatively large size allows a large flux to pass through it without heating it, and when that flux passes to the thinner wires of the screen 45, high heating results.

The gap 23 of the pole piece 20 may vary in size. The gap 23 is put in the pole piece to allow flux to pass from the pole piece 20 to the metal screen 45. The gap 23 must therefore be wide enough to encourage flux to jump from an end 21 or 22 of the pole piece 20 to the screen 45 rather than to the opposite end 22 or 21 of the pole piece 20.

This usually means that the gap 23 is wider than the distance between end 21 and the screen 45, or between end 22 and the screen 45. In general, more heat per area is induced as the width of the gap 23 is decreased, but the thickness of the sheets 41 and 43 to be joined must also decrease.

As mentioned above, an object of this invention is to provide inductive heating for which a cooling system is not needed. Since low power (30—150 watts) is sufficient to effect high heat through the heating gun 10, the components of the gun remain cool in operation. The thickness of the inductor coil wire 29 may vary, but is chosen to remain cool when the wattage to be used passes through it.

Frequency may also be adjusted in the heating gun 10. The highest efficient frequency tested has been approximately 200,000 Hz but a frequency of up to 1,000,000 Hz could regulate the heating gun 10. Reactance of the tank circuit is generally about 70Ω, but will vary with the frequency output of the amplifier 35.

The screen 45 is chosen for both its high resistance and low reluctance and its stiffening qualities. Iron alloys have been used in testing; with a greater energy input, alloys of other materials such as copper, aluminum and the like may be substituted.

Looking at one embodiment of the invention, a toroid of powdered iron was selected, of inside diameter 3.94 cm outside diameter 7.37 cm, and thickness 1.27 cm. A segment 0.873 cm long was removed, leaving a curved pole piece 20. A filler piece 24 of Teflon was fitted to fill the gap 23. An inductor coil 29 of three turns of 10-gauge copper wire was wrapped around the curved pole piece 20, and connected to a capacitor 27 of capacitance of 0.7 µf. The gun 10 was used to inductively heat two sheets 41 and 43 of acrylic, each sheet 0.32 cm thick. An iron carbon alloy wire screen 45, of 28-gauge wire and 26-mesh screen was placed between the sheets 41 and 43. An alternating current of 100 watts and 120,000 Hz was passed through the tank circuit 25. In three seconds, 0.285 Btu of heat was produced in the metal screen 45, which heat was sufficient to join the sheets 41 and 43 of acrylic.

A similar method is used to join two sheets of metal. Turning now to Fig. 3, an arrangement suitable for joining two sheets of aluminum is seen.

Two aluminium sheets 47 and 49 are selected and perforations 50 are made over the area to be joined. Between the sheets 47 and 49 are placed two sheets of thermoplastic 41 and 43 and a wire screen 45, in the arrangement already seen in Fig. 2, at the area to be joined. A heating gun is positioned above but not in direct contact with the aluminum sheets 47 and 49. Heat induced through the heating gun 10 melts the plastics 41 and 43. The plastics 41 and 43 flow into the perforations 50 of the aluminum sheets 47 and 49, and upon cooling form strong points of joining. Metal sheets may be joined at one area, or a seam can be formed by movement of the heating gun 10.

In the preferred mode of operation, for convenience the thermoplastics 41 and 43 and the screen 45 are heated and made into a fastener before the joining process begins. This is not necessary, nor is it only possible to bond metal to metal. A perforated sheet of aluminum may, for example, be joined to a sheet of acrylic. The number and size of perforations 50 is for each material to be bonded with respect to its strength and that desired of the bond.

The invention just described allows high inductive heating with low power input. The low power input makes external cooling systems unnecessary, allowing the heater to be used in outer space, or any vacuum or motionless environment. The many adjustable components make the heater usable for heating many types of material. The heater is portable and efficient.

The specifications herein discussed are not meant as limitations on the scope of the invention and its underlying theory. The above description refers to one embodiment of the invention.

## Claims

1. A relatively low-power induction heating apparatus (10) for heating an electrical conductive workpiece (45) above a predetermined temperature comprising:

electrical energy means for providing a line current at a fixed frequency and voltage;

a tank circuit comprising a capacitor (27) and an inductor (29) connected in parallel, said tank circuit being connected in parallel with said electrical energy means, the values of said capacitor and said inductor being such that said tank circuit is in resonance at said fixed frequency;

means for focusing the magnetic flux generated by said inductor onto an electrical conductive workpiece to heat it above said predetermined temperature;

said means for focusing the magnetic flux generated by said inductor consisting of a curved pole piece (20) having two ends (21 and 22) with the ends approaching each other and nearly brought together thereby leaving a relatively short gap (23) between the two ends, so that the magnetic flux generated by said inductor and focused by the said focusing means passes through the said workpiece (45);

wherein when said induction heating apparatus (10) is placed in its operating position with said gap (23) in the vicinity of said workpiece (45) and with said workpiece (45) outside said gap the combined thermal mass of said workpiece (45) and reluctance to the flow of the magnetic flux from one of said two ends to the workpiece (45), through the workpiece (45) and then from the workpiece (45) to the other of said two ends (21 and 22) are low enough to allow the eddy currents generated in said workpiece (45) by said magnetic flux to heat said workpiece (45) above said predetermined temperature.

2. An induction heating apparatus (10) according to claim 1 including a low reluctance high resistance workpiece (45).

3. An induction heating apparatus (10) according to claim 2 wherein said workpiece (45) is a wire screen.

4. An induction heating apparatus (10) according to claim 1 wherein said curved pole piece (20) is a pole piece in the shape of a toroid with a segment of the pole piece removed to provide said gap (23).

5. An induction heating apparatus (10) according to claim 4 wherein the ends of said pole piece (20) are flat.

6. An induction heating apparatus (10) according to claim 5 wherein the two ends (21 and 22) of said pole piece are facing in the same direction.

7. An induction heating apparatus (10) according to claim 1 wherein said electrical energy means supplies 30 to 150 watts of power.

8. A method of securing by relatively low-power induction heating two sheets of thermoplastic material (41 and 43) to each other which comprises:

providing electrical power at a fixed frequency to a tank circuit with a resonant frequency at said fixed frequency, said tank circuit comprising a capacitor (27) and an inductor (29) connected in parallel;

providing a curved pole piece (20) terminating in ends (21 and 22), said ends approaching each other and nearly brought together thereby leaving a short gap (23) between the two ends;

inducing a flux in said curved pole piece (20) by having the coils of inductor (29) wrapped around curved pole piece (20);

placing a member (45) emitting heat when subjected to flux between sheets (41 and 43) to be secured by induction heating;

focusing the flux induced in the curved pole piece (20) on the sheets to be joined and on the heat-emitting member (45) by having said short gap (23) between the two ends (21 and 22) greater than the distances between the ends (21 and 22) and member (45); and

maintaining flux concentration until the sheets (41, 43) have intermixed around the heat-emitting member (45) to effect a joint.

9. An induction heating apparatus (10) according to claim 1 wherein said electrical energy means is powered by a solar panel (37).

10. A method of securing by relatively low-power induction heating two perforated non-thermoplastic workpieces (47, 49) to each other which comprises:

providing electrical power at a fixed frequency to a tank circuit with a resonant frequency at said fixed frequency, said tank circuit comprising a capacitor (27) and an inductor (29) connected in parallel;

providing a curved pole piece (20) terminating in ends (21 and 22), said ends approaching each other and nearly brought together thereby leaving a short gap (23) between the two ends;

inducing a flux in said curved pole piece (20) by having the coils of said inductor (29) wrapped around said curved pole piece (20);

placing a member (45) emitting heat when subjected to flux between thermoplastics sheets (41 and 43) over which are placed the non-thermoplastic workpieces (47 and 49) having perforations (50) to be secured by induction heating;

focusing the flux induced in the curved pole piece (20) on the sheets and on the heat-emitter member (45) by having said short gap (23) between the two ends (21 and 22) greater than the distances between the ends (21 and 22) and the member (45); and

maintaining flux concentration until the sheets (41 and 43) have intermixed around the heat-emitting member (45) and flowed into the perforations (50) to effect a joint.

## Revendications

1. Un appareil de chauffage par induction de puissance relativement faible (10) destiné à chauffer une pièce conductrice de l'électricité (45) au-dessus d'une température prédéterminée, comprenant:

des moyens de génération d'énergie électrique destinés à fournir un courant d'alimentation ayant une fréquence et une tension fixée;

un circuit résonnant parallèle comprenant un condensateur (27) et une inductance (29) connectés en parallèle, ce circuit résonnant parallèle étant connecté en parallèle sur les moyens de génération d'énergie électrique, et la valeur du condensateur et de l'inductance étant telles que le circuit résonnant parallèle résonne à ladite fréquence fixée;

des moyens destinés à focaliser le flux magnétique produit par l'inductance sur une pièce conductrice de l'électricité, pour la chauffer au-dessus de la température prédéterminée;

les moyens de focalisation du flux magnétique produit par l'inductance consistant en une pièce polaire courbe (20) ayant deux extrémités (21 et 22), qui s'approchent l'une de l'autre et qui sont presque réunies, ce qui laisse un entrefer (23) relativement court entre les deux extrémités, de façon que le flux magnétique produit par l'inductance et focalisé par les moyens de focalisation traverse la pièce (45);

et lorsque cet appareil de chauffage par induction (10) est placé dans sa position de fonctionnement avec l'entrefer (23) à proximité de la pièce (45) et avec la pièce (45) à l'extérieur de l'entrefer, la masse thermique de la pièce (45), en combinaison avec la réluctance qui s'oppose à la circulation du flux magnétique à partir de l'une des deux extrémités vers la pièce (45), à travers la pièce (45) et ensuite de la pièce (45) vers l'autre des deux extrémités (21 et 23), est suffisamment faible pour que les courants de Foucault que le flux magnétique produit dans la pièce (45) chauffent cette pièce (45) au-dessus de la température prédéterminée.

2. Un appareil de chauffage par induction (10) selon la revendication 1, comprenant une pièce (45) à réluctance faible et à résistance élevée.

3. Un appareil de chauffage par induction (10) selon la revendication 2, dans lequel la pièce (45) consiste en une grille en fil métallique.

4. Un appareil de chauffage par induction (10) selon la revendication 1, dans lequel la pièce polaire courbe (20) est une pièce polaire ayant la forme d'un toroïde avec un segment de la pièce polaire enlevé pour former l'entrefer (23).

5. Un appareil de chauffage par induction (10) selon la revendication 4, dans lequel les extrémités de la pièce polaire (20) sont planes.

6. Un appareil de chauffage par induction (10) selon la revendication 5, dans lequel les deux extrémités (21 et 22) de la pièce polaire sont orientées dans la même direction.

7. Un appareil de chauffage par induction (10) selon la revendication 1, dans lequel les moyens de génération d'énergie électrique fournissent une puissance de 30 à 150 watts.

8. Un procédé pour joindre mutuellement deux plaques de matière thermoplastique (41 et 43) par chauffage par induction avec une puissance relativement faible, dans lequel:

on applique de l'énergie électrique à une fréquence fixée à un circuit résonnant parallèle ayant une fréquence de résonance égale à cette fréquence fixée, ce circuit résonnant parallèle comprenant un condensateur (27) et une inductance (29) connectés en parallèle;

on établit une pièce polaire courbe (20) se terminant par des extrémités (21 et 22) qui s'approchent l'une de l'autre et sont presque réunies, ce qui laisse un entrefer court (23) entre les deux extrémités;

on induit un flux dans les pièces polaires courbes (20) en enroulant les spires de l'inductance (29) autour de la pièce polaire courbe (20);

on place entre les plaques (41 et 43) devant être jointes par chauffage par induction, un élément (45) qui dégage de la chaleur lorsqu'il est soumis au flux;

on focalise sur les plaques à joindre et sur l'élément dégageant de la chaleur (45) le flux qui est induit dans la pièce polaire courbe (20), en faisant en sorte que l'entrefer court (23) entre les deux extrémités (21 et 22) soit plus grand que les distances entre les extrémités (21 et 22) et l'élément (45); et

on maintient la concentration du flux jusqu'à l'obtention de l'interpénétration des matières des plaques (41 et 43) autour de l'élément dégageant de la chaleur (45), pour former un joint.

9. Un appareil de chauffage par induction (10) selon la revendication 1, dans lequel les moyens de génération d'énergie électrique sont alimentés par un panneau solaire (37).

10. Un procédé pour joindre l'une à l'autre deux pièces non thermoplastiques perforées (47), 49), par chauffage par induction avec une puissance relativement faible, dans lequel:

on applique de l'énergie électrique à une fréquence fixée à un circuit résonnant parallèle ayant une fréquence de résonance égale à la fréquence fixée, ce circuit résonnant parallèle comprenant un condensateur (27) et une inductance (29) connectés en parallèle;

on établit une pièce polaire courbe (20) qui se termine par des extrémités (21 et 22) qui s'approchent l'une de l'autre et sont presque réunies, ce qui laisse un entrefer court (23) entre les deux extrémités;

on induit un flux dans la pièce polaire courbe (20) en enroulant les spires de l'inductance (29) autour de la pièce polaire courbe (20);

on place en élément (45) dégageant de la chaleur lorsqu'il est soumis au flux, entre des plaques de matière thermoplastique (41 et 43) sur lesquelles sont placées les pièces non thermoplastiques (47 et 49) comportant des perforations (50), qui doivient être jointes par chauffage par induction;

on focalise sur les plaques et sur l'élément dégageant de la chaleur (45) le flux qui est induit dans la pièce polaire courbe (20), en faisant en sorte que l'entrefer court (23) entre les deux extrémités (21 et 22) soit plus grand que les distances entre les extrémités (21 et 22) et l'élément (45); et

on maintient la concentration du flux jusqu'à ce que les matières constituant les plaques (41 et 43) s'interpénètrent autour de l'élément dégageant de la chaleur (45) et pénétrant dans les perforations (50) pour former un joint.

**Patentansprüche**

1. Induktionsheizapparat (10) mit relativ niedriger Leistung zum Erhitzen eines elektroleitfähigen Werkstücks (45) über eine vorbestimmte Temperatur, enthaltend:

eine Vorrichtung für elektrische Energie zur Lieferung eines Netzstroms bei einer festgelegten Frequenz und Spannung;

einen Oszillatorschwingkreis enthaltend einen Kondensator (27) und eine Induktor (29), die parallel geschaltet sind, wobei der Oszillatorschwingkreis parallel mit der Vorrichtung für elektrische Energie geschaltet ist und wobei die Werte des Kondensators und des Induktors derart sind, daß der Oszillatorschwingkreis in Resonanz bei dieser feststehenden Frequenz ist;

Vorrichtung zum Focussieren des Magnetflusses, der erzeugt wird durch den Induktor, auf ein elektrisch leitendes Werkstück, um es über die vorbestimmte Temperatur zu erhitzen;

wobei die Vorrichtung zum Focussieren des durch den Induktor erzeugten Magnetflusses aus einem gekrümmten Polstück (20) besteht, das zwei Enden (21) und 22) aufweist, wobei sich die Enden gegenseitig nähern und fast zusammengebracht sind und dadurch ein relativ kurzer Abstand (23) zwischen den beiden Enden verbleibt, so daß der durch den Induktor erzeugte und durch die Focussierungsvorrichtung focussierte Magnetfluß durch das Werkstück (45) fließt;

0 027 306

worin, wenn der Induktionsheizapparat (10) in Betriebsstellung gebracht wird mit dem Abstand (23) in der Nähe des Werkstücks (45) und mit dem Werkstück (45) außerhalb dieses Abstandes, die kombinierte thermische Masse dieses Werkstücks (45) und Reluktanz gegenüber dem Magnetfluß von einem dieser beiden Enden zum Werkstück (45), durch das Werkstück (45) und dann vom Werkstück (45) zum anderen der beiden Enden (21 und 22), gering genug sind, um den in dem Werkstück (45) durch den Magnetfluß erzeugten Wirbelströmen zu gestatten, das Werkstück (45) auf über die vorbestimmte Temperatur zu erhitzen.

2. Induktionsheizapparat (10) nach Anspruch 1 enthaltend ein Werkstück (45) mit geringer Reluktanz und hohem Widerstand.

3. Induktionsheizapparat (10) nach Anspruch 2, worin das Werkstück (45) ein Drahtnetz ist.

4. Induktionsheizapparat (10) nach Anspruch 1, worin das gekrümmte Polstück (20) ein Polstück in Form eines Toroids ist, bei dem ein Segment des Polstücks entfernt wurde, um den Abstand (23) zu schaffen.

5. Induktionsheizapparat (10) nach Anspruch 4, worin die Enden dieses Polstücks (20) flach sind.

6. Induktionsheizapparat (10) nach Anspruch 5, worin die beiden Enden (21 und 22) dieses Polstücks in die gleiche Richtung zeigen.

7. Induktionsheizapparat (10) nach Anspruch 1, worin die Vorrichtung für elektrische Energie eine Leistung von 30 bis 150 Watt liefert.

8. Verfahren zum miteinander Verbinden von zwei Folien oder Platten aus thermoplastischem Material (41 und 43) durch Induktionsheizung mit relativ niedriger Leistung, bei dem man:

elektrischen Strom bei einer feststehenden Frequenz an einen Oszillatorschwingkreis liefert mit einer resonanten Frequenz bei dieser feststehenden Frequenz, wobei dieser Oszillatorschwingkreis einen Kondensator (27) und einen Induktor (29), die parallel geschaltet sind, enthält;

ein gekrümmtes Polstück (20) bereitstellt, das in Enden (21 und 22) ausläuft, wobei die Enden sich gegenseitig nähern und fast zusammengebracht werden, wodurch ein kurzer Abstand (23) zwischen den beiden Enden entsteht;

einen Fluß in diesem gekrümmten Polstück (20) induziert, indem die Spulen des Induktors (29) um das gekrümmte Polstück (20) gewickelt sind;

ein Teil (45), das Hitze austrahlt, wenn es dem Fluß ausgesetzt wird zwischen den Folien oder Platten (41 und 43), die durch Induktionsheizung verbunden werden sollen, anordnet;

den induzierten Fluß in dem gekrümmten Polstück (20) auf die zu verbindenden Folien oder Platten und auf das Hitze abstrahlende Teil (45) focussiert, indem man den kurzen Abstand (23) zwischen den beiden Enden (21 und 22) größer hält als die Abstände zwischen den Enden (21 und 22) und dem Teil (45) und die Konzentration des Flusses aufrechterhält, bis die Folien oder Platten (41 und 43) sich um das Hitze ausstrahlende Teil (45) untereinander vermischt haben, um die Verbindung zu erzielen.

9. Induktionsheizapparat (10) nach Anspruch 1, worin die Vorrichtung für die elektrische Energie durch eine Solarzelle (37) gespeist wird.

10. Verfahren zum miteinander Verbinden von zwei perforierten nicht-thermoplastischen Werkstücken (47 und 49) durch Induktionsheizung mit relativ niedriger Leistung, bei dem man:

elektrischen Strom bei einer feststehenden Frequenz an einen Oszillatorschwingkreis liefert mit einer resonanten Frequenz bei dieser feststehenden Frequenz, wobei dieser Oszillatorschwingkreis einen Kondensator (27) und einen Induktor (29), die parallel geschaltet sind, enthält;

ein gekrümmtes Polstück (20) bereitstellt, das in Enden (21 und 22) ausläuft, wobei die Enden sich gegenseitig nähern und fast zusammengebracht werden, wodurch ein kurzer Abstand (23) zwischen den beiden Enden entsteht;

einen Fluß in diesem gekrümmten Polstück (20) induziert, indem die Spulen des Induktors (29) um das gekrümmte Polstück (20) gewickelt sind;

ein Teil (45), das Hitze austrahlt, wenn es dem Fluß ausgesetzt wird zwischen den thermoplastischen Folien oder Platten (41 und 43), über denen die nichtthermoplastischen Werkstücke (47 und 49), die Perforationen (50) aufweisen, angeordnet sind, die durch Induktionsheizung verbunden werden sollen, anordnet;

den induzierten Fluß in dem gekrümmten Polstück (20) auf die Folien oder Platten und auf das Hitze abstrahlende Teil (45) focussiert, indem man den kurzen Abstand (23) zwischen den beiden Enden (21 und 22) größer hält als die Abstände zwischen den Enden (21 und 22) und dem Teil (45) und die Konzentration des Flusses aufrechterhält, bis die Folien oder Platten (41 und 43) sich um das Hitze ausstrahlende Teil (45) untereinander vermischt haben und in die Perforationen (50) geflossen sind, um die Verbindung zu erzielen.

AMPLIFIER

OSCILLATOR

SOLAR
PANEL-
ING

SUN

FIG. 1

FIG. 2

FIG. 3

0 027 306